# EUROPÄISCHE PATENTSCHRIFT

(11) **EP 0 300 329 B1**
(45) Veröffentlichungstag und Bekanntmachung des Hinweises auf die Patenterteilung: **17.03.1993**
(21) Anmeldenummer: 88111107.4
(22) Anmeldetag: 12.07.1988
(51) Int. Cl.: C08G 73/12, C08F 222/40

(54) **Bismaleinimid-Harze**
Bismaleinimid resins
Résines de bismaleinimide

(30) Priorität: 21.07.1987 DE 3724055
(43) Veröffentlichungstag der Anmeldung: 25.01.1989
(73) Patentinhaber: BASF Aktiengesellschaft, 67063 Ludwigshafen (DE)
(72) Erfinder: Eisenbarth, Philipp, Dr., D-6702 Bad Duerkheim (DE); Franz, Lothar, Dr., D-6700 Ludwigshafen (DE)

(56) Entgegenhaltungen:
- EP-A- 0 107 897
- DE-A- 2 459 925
- DE-A- 2 627 045
- DE-B- 1 770 867

## Beschreibung

Die Erfindung betrifft hitzehärtbare Formmassen auf Basis von Bismaleinimidharzen.

Aromatische Bismaleinimidmonomere, die zur Herstellung von Bismaleinimidharzen, z.B. nach DE-A 1 770 867, DE-A 2 459 925 oder US-A 4 100 140 Verwendung finden, sind relativ kurzkettige, ein oder zwei Phenylenringe enthaltende Verbindungen, beispielsweise 4,4′-Bismaleinimidodiphenylmethan, 4,4′-Bismaleinimidodiphenylether oder 2,4-Bismaleinimidotoluol. Die daraus herstellbaren Werkstoffe besitzen zwar sehr gute mechanische Eigenschaften oberhalb 200°C, sind jedoch infolge der hohen Vernetzungsdichte spröde und absorbieren relativ viel Feuchtigkeit, was sich negativ auf ihr mechanisches Verhalten unter feuchtheißen Bedingungen auswirkt. Infolge der hohen Schmelzpunkte, der geringeren Löslichkeit in niedrig siedenden Lösungsmitteln und der Neigung zu Rekristallisationserscheinungen ist die Verarbeitbarkeit der oben genannten Bismaleinimide zu Halbzeugen bzw. Prepregs für Verbundwerkstoffe relativ schwierig.

Ein Weg, die Verarbeitbarkeit und Löslichkeit zu verbessern, besteht z.B. darin, niedrig schmelzende Bismaleinimidmischungen, erhältlich durch Zusatz eines aliphatischen Maleinimids, einzusetzen, was jedoch die thermische Stabilität des Polymeren herabsetzt.

Der Erfindung lag daher die Aufgabe zugrunde, Bismaleinimidharze bereitzustellen, welche die genannten Nachteile nicht besitzen.

Diese Aufgabe wird gelöst durch die erfindungsgemäßen Harze, die als Bismaleinimidkomponente A ein Bismaleinimid der Formel I enthalten: 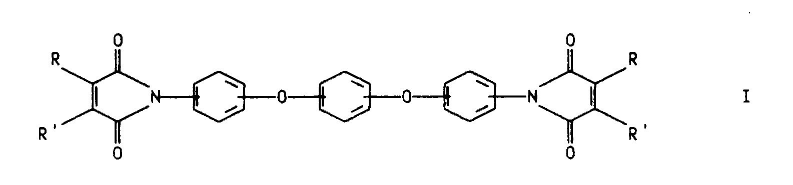
wobei R und R′ = H, Methyl oder Phenyl bedeuten.

Bismaleinimide der Formel I sind z.B. 1,3-Bis(3-maleinimidophenoxy)benzol, 1,4-Bis(3-maleinimidophenoxy)benzol, 1,3-Bis(4-maleinimidophenoxy)benzol und 1,4-Bis(4-maleinimidophenoxy)benzol. Sie sind nach bekannten Verfahren, z.B. nach DE-B 20 40 094, durch Umsetzung eines Diamins der Formel II mit 2 Äquivalenten Maleinsäureanhydrid und anschließender Dehydratisierung herstellbar. 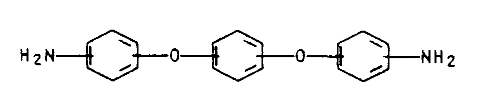
Diamine der Formel II sind bekannt. Bevorzugte Bismaleinimide sind 1,3-Bis(3-maleinimidophenoxy)benzol und 1,3-Bis(4-maleinimidophenoxy)benzol.

Die erfindungsgemäßen Bismaleinimidharze werden erhalten durch Umsetzung eines Bismaleinimids A der Formel I allein oder in Kombination mit weiteren Bismaleinimiden, z.B. 4,4′-Bismaleinimidodiphenylmethan, 2,4-Bismaleinimidotoluol, 1,3-Bismaleinimidobenzol, 3,3′-Bismaleinimidodiphenylsuflon, 1,6-Bismaleinimidohexan, 1,8-Bismaleinimidooktan oder 1,6-Bismaleinimido-2,2,4-trimethylhexan mit einem Comonomeren B. Es können auch Tri-, Tetra- oder Polymaleinimide sowie Monomaleinimide, z.B. N-Phenyl- oder N-Allylmaleinimid, zugesetzt werden. Geeignete Comonomere B sind Polyphenole, Alkenylphenole oder -phenolether, Aminophenole, Vinyl- und Allylverbindungen. Unter den verwendbaren Polyphenolen sind Bisphenol A, Bisphenol F oder Novolake zu nennen; weitere sind in US-A 4 100 140 aufgeführt. Geeignete Alkenylphenole oder -phenolether werden in DE-A 2 627 045 beschrieben, bevorzugt ist o,o-Diallylbisphenol A. Ebenfalls geeignet sind oligomere allyl- oder propenylterminierte Arylethersulfone und -ketone nach EP-A 230 741. Einsetzbare Aminophenole sind z.B. m- oder p-Aminophenol. Unter Vinyl- und Allylverbindungen sind beispielhaft zu nennen: Styrol, Divinylbenzol, Diallylphthalat, Acrylate, Diallylbenzol, Triallylisocyanurat, Triallylcyanurat oder Vinylpyrrolidon. Ihr Anteil beträgt 5 bis 100 Gew.%, bezogen auf A.

Je nach beabsichtigtem Verwendungszweck kann es vorteilhaft sein, den erfindungsgemäßen Harzen weitere Komponenten beizufügen. In Frage kommen beispielsweise übliche Epoxidharze, oder Cyanatharze, bevorzugt in Mengen von 5 bis 40 Gew.%, bezogen auf A.

Weitere Zusätze sind Katalysatoren oder auch Inhibitoren. Geeignete Katalysatoren sind tertiäre Amine, Imidazole, organische Säuren, tertiäre Phosphine, Peroxide oder Metallverbindungen. Als Inhibitoren sind Hydrochinon, Benzochinon oder Phenothiazin zu nennen. Die Menge an eingesetzten Initiatoren bzw. Inhibitoren soll etwa zwischen 0,01 -1,5 Gew.%, bezogen auf A, liegen.

Die erfindungsgemäßen Harze können darüberhinaus die in der Technologie der härtbaren Kunststoffe üblichen Zusatzstoffe enthalten, wie Füllstoffe, Weichmacher, Pigmente, Farbstoffe, Formtrennmittel, flammhemmende Stoffe. Als Füllstoffe können auch Glas-, und Kohlenstoffasern, Graphitpulver, Glimmer, Quarzpulver, Koalin oder Metallpulver bis zu einem Anteil von 80 Gew.%, bezogen auf A+B, verwendet werden.

Neben relativ guter Löslichkeit, auch in niedrig siedenden Lösungsmitteln, besitzen die erfindungsgemäßen Harze deutlich niedrigere Erweichungspunkte und Viskositäten als Harze auf Basis des üblicherweise eingesetzten 4,4'-Bismaleinimidodiphenylmethan oder auch auf Basis von 4,4'-Bismaleinimidodiphenylether, was aufgrund des höheren Molekulargewichts der Bismaleinimide I nicht zu erwarten war. Insbesondere wird dadurch eine wesentlich verbesserte Verarbeitbarkeit, z.B. bei der Schmelztränkung von Verstärkungsfasern erreicht, denn diese kann bei niedrigeren Temperaturen durchgeführt werden. Auch wird die von vielen Halbzeugverarbeitern im Flugzeugbau gewünschte Klebrigkeit (tack) von Prepregs positiv beeinflußt. Es zeigte sich bei Vergleichsversuchen ferner, daß die erfindungsgemäßen Harze eine erheblich geringere Rekristallisationsneigung besitzen. Vorteile gegenüber Harzen auf Basis Diaminodiphenylmethan und Diaminodiphenylether ergeben sich auch in den Eigenschaften der gehärteten Harze. So sind z.B. der E-Modul und die Schlagzähigkeit signifikant erhöht, wobei sich der Effekt mit zunehmendem Anteil von Diphenoxybenzolstrukturen im Polymeren verstärkt. Ebenso überraschend wie der weitere Anstieg des Moduls trotz herabgesetzter Vernetzungsdichte ist die erhebliche Verringerung der Feuchtigkeitsabsorption in den erfindungsgemäßen Harzen, obwohl die Anwesenheit mehrerer Ethergruppierungen eine verstärkte Affinität zu Wasserstoffbrückenbindungen erwarten ließe. Da der relative Anteil an aliphatischen Molekülstrukturen verringert ist, besitzen die erfindungsgemäßen Harze eine ausgezeichnete thermische Beständigkeit.

Die erfindungsgemäßen Harze sind als Imprägnier-, Gieß- und Laminierharze als Formmassen (gefüllt oder ungefüllt) oder als Klebstoffe einsetzbar.

Dienen sie zur Herstellung von Hochleistungsverbundwerkstoffen, so kann die Tränkung von Glas-, Kohlenstoff- oder Aramidfasern unter Bildung von unidirektionalen Prepregs oder Gewebeprepregs entweder aus der Schmelze bei 50 - 150°C oder aus Lösung erfolgen. Geeignete Lösungsmittel sind halogenierte Kohlenwasserstoffe, wie z.B. Dichlormethan, Ketone wie z.B. Aceton oder Methylethylketon, ferner Glykolester, Toluol, Dimethylformamid, N-Methylpyrrolidon sowie Gemische aus mehreren Lösungsmitteln.

Zur Herstellung der erfindungsgemäßen Bismaleinimidharze werden die Ausgangsmaterialien unter Anwendung der üblichen Techniken vermischt und auf Temperaturen zwischen 70 - 190°C erhitzt, wobei die Bildung eines Präpolymeren erfolgt. Je nach Fortschritt der Vorpolymerisation erhält man eine hochviskose Schmelze oder einen glasartig erstarrten Feststoff, der je nach Verwendungszweck gemahlen oder in einem Lösungsmittel gelöst wird. Die Herstellung der Harze kann auch in einem der oben genannten Lösungsmittel erfolgen.

Die Härtung der erfindungsgemäßen Harze erfolgt bei Temperaturen von ca. 100 - 300°C, gegebenenfalls unter Druck, vorzugsweise zwischen 160 - 260°C. Die gewählte Härtungstemperatur hängt entscheidend von der Länge der Härtungszeit ab. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200°C anschließen.

Aus den erfindungsgemäßen Harzen können Hochleistungswerkstoffe, z.B. Isoliermaterialien, Strukturbauteile, Apparategehäuse, Leiterplatten und elektrische Bauteile hergestellt werden, die hohen Temperaturen ausgesetzt sind.

### Beispiele

### Herstellung von 1,3-Bis(3-maleinimidophenoxy)benzol

Zu einer Lösung von 392 g Maleinsäureanhydrid und 11 g Nickel(II)acetat-tetrahydrat in 1000 ml Aceton wird bei 10 - 20°C eine Lösung von 584 g 1,3-Bis(3-aminophenoxy)benzol in 1000 ml Aceton innerhalb 1 Stunde zugetropft. Man rührt noch 2 Stunden nach und gibt dann 612,6 g Acetanhydrid und 121,5 g Triethylamin hinzu. Nach 3 stündigem Erhitzen auf 50°C kühlt man ab und tropft 5000 ltr. Wasser hinzu. Das ausgefallene Produkte wird abfiltriert, gewaschen und bei 70°C im Vakuum getrocknet. Man erhält 747 g (82 %) 1,3-Bis(3-maleinimidophenoxy)benzol als schwachgelbe Kristalle mit Schmp. 138 - 140°C.
1. In einem Reaktionsgefäß werden unter Rühren bei einer Badtemperatur von 160°C 35 g 1,3-Bis(3-maleinimidophenoxy)benzol und 15 g o,o-Diallylbisphenol A aufgeschmolzen. Das erhaltene Harz besitzt bei Raumtemperatur eine gute Klebrigkeit und zeigt nach 5 Tagen noch keine Anzeichen einer Rekristallisation. Seine Viskosität bei 125°C ist unterhalb 50 mPas. Nach Aushärtung bei 2 Stunden 160°C, 2 Stunden 190°C und 12 Stunden 240°C beträgt die Wasseraufnahme des Polymeren 3.20 % (14 Tage in 70°C heißem Wasser).

### Vergleichsbeispiele:

1a. Nach Beispiel 1 stellt man ein Harz aus 35 g 4,4' -Bismaleinimidodiphenylmethan und 15 g o,o-Diallylbisphenol A her. Die Klebrigkeit bei Raumtemperatur ist geringer als bei Beispiel 4; nach 2 Tagen ist das eingesetzte Bismaleinimid teilweise auskristallisiert. Die Viskosität des Harzes bei 125°C beträgt 80 mPas. Die Wasseraufnahme des gehärteten Polymeren betragt 5,0 %.
1b. Nach Beispiel 1 stellt man ein Harz aus 7 g 4,4' -Bismaleinimidodiphenylether und 3 g o,o-Diallylbisphenol A her. Die Klebrigkeit bei Raumtemperatur ist wesentlich geringer als bei Beispiel 4; das eingesetzte Bismaleinimid ist nach 1 Tag teilweise auskristallisiert. Die Viskosität des Harzes bei 125°C beträgt 170 mPas. Die Wasseraufnahme des gehärteten Polymeren beträgt 5,11 %.

2. Man stellt analog Beispiel 1 ein Harz aus 60 g 1,3-Bis(4-maleinimidophenoxy)benzol und 40 g 0,0-Diallylbiphenol A her. Seine Gelzeit beträgt bei 160°C 36 Minuten.

## Patentansprüche

1. Bei einer Temperatur von 100 - 300°C härtbare Bismaleinimidharze, enthaltend
A)ein Bismaleinimid und
B)5 bis 100 Gew.-%, bezogen auf A, eines Comonomeren,
dadurch gekennzeichnet, daß die Komponente A mindestens 1 Gew.-% des Bismaleinimids der Formel I enthält: 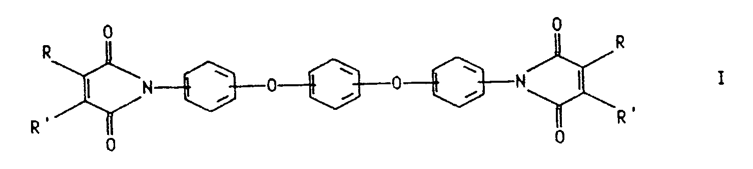 wobei R und R' = Wasserstoff, Methyl oder Phenyl sein können, und daß die Comonomeren Polyphenole, Alkenylphenole, Alkenylphenolether, Aminophenole, Vinylverbindungen oder Allylverbindungen sind.

2. Hitzehärtbare Bismaleinimidharze nach Anspruch 1, dadurch gekennzeichnet, daß die Comonomeren Alkenylphenole oder Alkenylphenolether sind.

3. Prepregs für Hochleistungsverbundwerkstoffe, dadurch gekennzeichnet, daß sie hitzehärtbare Bismaleinimidharze nach Anspruch 1, sowie Glas-, Kohlenstoff- oder Aramidfasern enthalten.

## Claims

1. A bismaleimide resin heat-curable at from 100 to 300°C and containing
A) a bismaleimide and
B) 5 to 100% by weight, based on A, of a comonomer,
wherein the component A contains not less than 1% by weight of the bismaleimide of the formula I 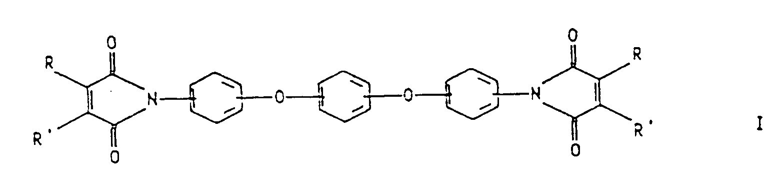 where R and R' may each be hydrogen, methyl or phenyl, and wherein the comonomer is a polyphenol, an alkenylphenol, an alkenylphenol ether, an aminophenol, a vinyl compound or an allyl compound.

2. A heat-curable bismaleimide resin as claimed in claim 1, wherein the comonomer is an alkenylphenol or an alkenylphenol ether.

3. A prepreg for high-performance composite materials, which contains a heat-curable bismaleimide resin as claimed in claim 1 and glass, carbon or Aramid fibers.

## Revendications

1. Résines de bismaléimide durcissables à une température de 100 à 300°C, contenant
A) un bismaléimide et
B) de 5 à 100% en poids, par rapport à A, d'un comonomère,
caractérisées en ce que le composant A contient au moins 1% en poids du bismaléimide de formule I 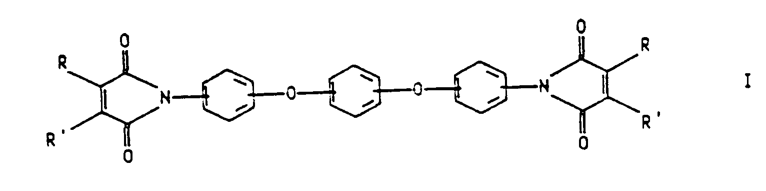 dans laquelle R et R' peuvent être des atomes d'hydrogène ou des restes méthyle ou phényle, et en ce que les comonomères sont des polyphénols, des alcénylphénols, des oxydes d'alcényle et de phénol, des aminophénols, des composés vinyliques ou des composés allyliques.

2. Résines de bismaléimide thermodurcissables selon la revendication 1, caractérisées en ce que les comonomères sont des alcénylphénols ou des oxydes d'alcényle et de phénol.

3. Préimprégnés pour matériaux composites de hautes performances, caractérisés en ce qu'ils contiennent des résines de bismaléimide thermodurcissables selon la revendication 1, ainsi que des fibres de verre, de carbone ou d'aramide.
